**Europäisches Patentamt**

**European Patent Office**

**Office européen des brevets**

(19)

(11) Veröffentlichungsnummer : **0 145 048**
**B1**

(12)  **EUROPÄISCHE PATENTSCHRIFT**

(45) Veröffentlichungstag der Patentschrift :
**17.08.88**

(51) Int. Cl.⁴ : **H 04 M   3/22**

(21) Anmeldenummer : **84201541.4**

(22) Anmeldetag : **25.10.84**

(54) **Verfahren und Prüfeinrichtung zum Prüfen aus Unterbrechung des Übertragungswegs innerhalb eines Gerätes mit Geräteeinsätzen.**

(30) Priorität : **28.10.83 DE 3339155**
**28.10.83 DE 3339156**

(43) Veröffentlichungstag der Anmeldung :
**19.06.85 Patentblatt 85/25**

(45) Bekanntmachung des Hinweises auf die Patenterteilung : **17.08.88 Patentblatt 88/33**

(84) Benannte Vertragsstaaten :
**AT CH DE FR GB LI**

(56) Entgegenhaltungen :
**SIEMENS REVIEW Band 45, Nr. 5, 1978; C. CHAILLIE
et al. "Communications test sets under the influence
of new technologies", Seiten 208-211
TELECOM REPORT, Beiheft: Telefonsystem EMS,
1979; F. FAHRENSCHON et al. "EMS-Garant für
gesteigerte Sicherheit", Seiten 46-49
NACHRICHTENTECHNIK ELEKTRONIK Band 28, Nr.
6, 1978; D. KRESS et al. "Zur Fertigungsprüftechnik
für Verdrahtungen und Koppelfelder", Seiten 228-230**

(73) Patentinhaber : **Philips Patentverwaltung GmbH
Wendenstrasse 35 Postfach 10 51 49
D-2000 Hamburg 1 (DE)
DE
N.V. Philips' Gloeilampenfabrieken
Groenewoudseweg 1
NL-5621 BA Eindhoven (NL)
CH FR GB LI AT**

(72) Erfinder : **Späth, Günther, Dipl.-Ing. (FH)
Pommelsbrunner Weg 18
D-8561 Happurg (DE)**
Erfinder : **Zeder, Werner, Ing.grad.
Arthur-Goller-Siedl. 25
D-8640 Kronach (DE)**

(74) Vertreter : **Peuckert, Hermann, Dipl.-Ing. et al
Philips Patentverwaltung GmbH Wendenstrasse 35
Postfach 10 51 49
D-2000 Hamburg 1 (DE)**

**Beschreibung**

Die Erfindung betrifft ein Verfahren zum Prüfen auf Unterbrechung des Übertragungswegs innerhalb eines Geräts mit Geräteeinsätzen gemäß den Oberbegriffen der Patentansprüche 1 und 2.

Geräte, welche beispielsweise in modernen Nachrichtenübermittlungssystemen Anwendung finden, werden im zunehmenden Maße umfangreicher. Dies ist darauf zurückzuführen, daß dem Anwender eine große Anzahl von Leistungsmerkmalen dieser Nachrichtenübermittlungssysteme zur Verfügung gestellt werden soll. Ein Kriterium zur Beurteilung der Leistungsfähigkeit eines Nachrichtenübermittlungssystems ist dessen Verfügbarkeit für den Anwender.

Die Verfügbarkeit ist definiert als Quotient aus mittlerer störungsfreien Zeit MTBF und Summe aus mittlerer störungsfreien Zeit MTBF und Mittelwert für die Reparaturzeiten im Nachrichtenübermittlungssystem MTTR. Die Verfügbarkeit ist also die Wahrscheinlichkeit, angegeben in Prozent, ein Netz oder einen Teil des Netzes zu einem vorgegebenen Zeitpunkt in einem funktionsfähigen Zustand anzutreffen. Das Netz (Nachrichtenübermittlungssystem) ist die Gesamtheit von Vermittlungseinrichtungen, Endstellen und Übertragungseinrichtungen einschließlich der Übertragungswege.

Um eine hohe Anzahl von Leistungsmerkmalen innerhalb des Nachrichtenübermittlungssystems zu erhalten, bestehen die Geräte, welche dabei Anwendung finden, aus immer mehr Geräteeinsätzen. Diese Zunahme führt in der Regel zu einem geringeren Mittelwert MTBF. Außerdem führt eine große Anzahl von Geräteeinsätzen im Gerät in der Regel zu längeren Reparaturzeiten, erhöht den Mittelwert MTTR und stellt höhere Anforderungen an das Wartungspersonal. Beide Mittelwerte MTBF und MTTR zusammen verringern die Verfügbarkeit für den Anwender. Werden besondere Maßnahmen zur Erhöhung des Mittelwerts MTBF ergriffen, so ist der Schaltungsaufwand für das Gerät größer und somit steigen die Kosten für das Gerät. Um die Kosten für das Gerät zu verringern und um eine bessere Verfügbarkeit für den Anwender zu erreichen wird in der Regel eine Verringerung der Reparaturzeiten, d. h. eine Verkleinerung des Mittelwerts MTTR angestrebt. Die Reparaturzeiten können durch im Gerät vorgesehene Diagnoseeinrichtungen und Prüfeinrichtungen verringert werden. Eine wichtige Prüfaufgabe für solche Prüfeinrichtungen, welche in Fernsprechvermittlungssystemen oder Fernsprechübertragungssystemen angewandt werden, ist die Überprüfung von Leitungen, auf welchen die Nachricht (z. B. Sprachsignal) übertragen wird, auf Unterbrechung.

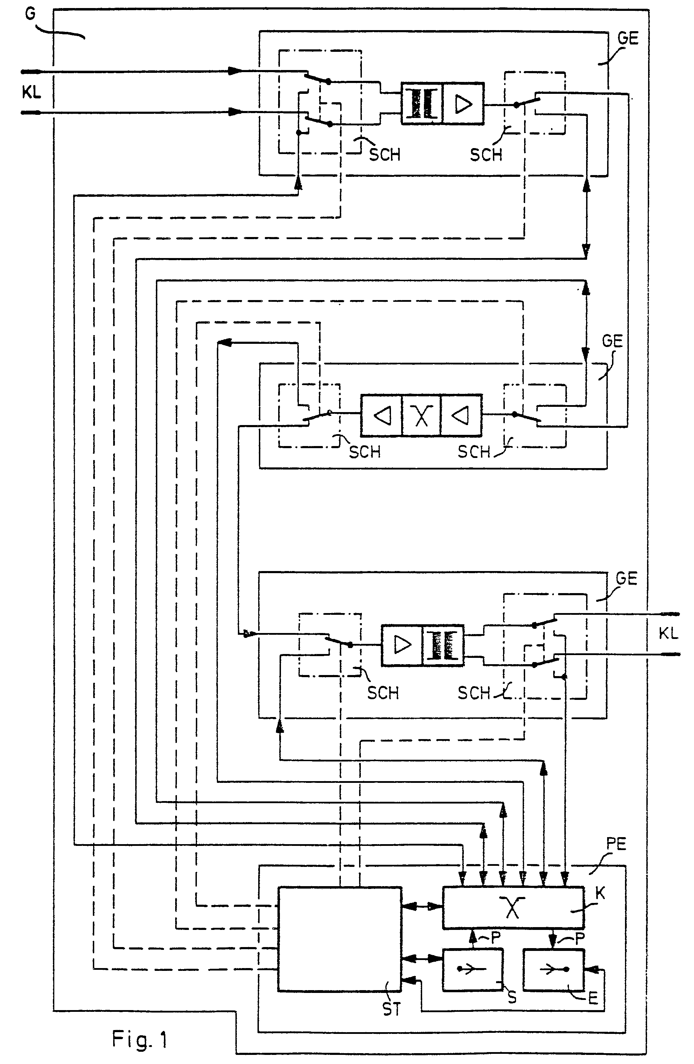

In Fig. 1 ist eine Ausführungsform für eine Prüfeinrichtung zum Prüfen auf Unterbrechung des Übertragungswegs innerhalb eines Geräts mit Geräteeinsätzen dargestellt. Im Gerät ist die Prüfeinrichtung, welche einen (Prüfsignal-) Sender, einen (Prüfsignal-) Empfänger, eine Steuereinrichtung sowie ein Koppelfeld enthält, an zentraler Stelle vorgesehen. Eine Prüfung auf Leitungsunterbrechung kann beispielsweise dadurch erfolgen, daß eine Umschaltung der Ein- oder Ausgänge der Geräteeinsätze auf die Prüfeinrichtung vorgenommen wird. Diese Prüfeinrichtung kann bei kleineren Geräten einen relativ hohen Anteil des Gesamtaufwands für das Gerät ausmachen.

Erfolgt die Umschaltung der Ein-bzw. Ausgänge der Geräteeinsätze beispielsweise mittels Relais, so wird nicht nur der Aufwand für die Prüfeinrichtung beträchtlich erhöht, sondern durch das Relais wird der Mittelwert MTBF des Geräteeinsatzes verringert. Wird das Relais durch eine andere Schalteinrichtung (beispielsweise durch einen Transistor) ersetzt, so sind von dieser hohe Anforderungen bezüglich Symmetrie des Übertragungswegs und Überspannungsfestigkeit (vom Transistor) zu erfüllen.

Der Erfindung liegt die Aufgabe zugrunde, eine Unterbrechung des Übertragungswegs innerhalb eines Geräts mit Geräteeinsätzen zuverlässig und mit geringem Aufwand an Mitteln erkennen zu können.

Diese Aufgabe wird durch die in den Patentansprüchen 1 oder 2 gekennzeichneten Merkmale gelöst.

Durch das erfindungsgemäße Verfahren nach den Patentansprüchen 1 oder 2 kann auf einfache Art und Weise eine Unterbrechung des Übertragungswegs innerhalb des Geräts erkannt werden. Ein veränderter Frequenzgang bzw. eine Pegelabweichung wird innerhalb bestimmter Grenzen nicht als Fehler betrachtet (geringe Prüftiefe).

Vorteilhafte Ausgestaltungen der Erfindung sind in den Unteransprüchen gekennzeichnet.

Der Aufwand für die Prüfeinrichtung macht nur einen Bruchteil des Gesamtaufwandes für das Gerät aus. Zur Prüfsignalerzeugung und Steuerung der Auswertung können Signale der Steuereinrichtung mitverwendet werden. Ein weiterer Vorteil ergibt sich dadurch, daß der MTBF-Wert durch die Prüfeinrichtung kaum verringert wird. Der geschlossene Kompromiß bezüglich der Prüftiefe spielt kaum eine Rolle, wenn die Ausfallarten des Übertragungswegs mit einer hohen Wahrscheinlichkeit bekannt sind, so daß eine Prüftiefe, mit der diese Fehlerbilder sicher erkannt werden, genügt. Ein weiterer Vorteil liegt darin, daß keine Schalteinrichtungen zur Abtrennung der mit dem Gerät verbundenen Leitungen sowie der Leitungen und den Geräteeinsätzen des Geräts sowie keine Koppeleinrichtung in der Prüfeinrichtung erforderlich sind.

Die Erfindung wird nachstehend anhand der in der Zeichnung dargestellten Ausführungsformen näher beschrieben und erläutert.

Es zeigt :

Fig. 1 eine Ausführungsform für eine Prüfeinrichtung mit Schalteinrichtungen an Eingängen bzw. Ausgängen der Geräteeinsätze und mit einem Koppelfeld.

Fig. 2 eine erste Ausführungsform und

Fig. 3 eine zweite Ausführungsform der Prüfeinrichtung im Gerät zur Durchführung des erfindungsgemäßen Prüfverfahrens.

Fig. 4 eine Ausführungsform eines Senders.

Fig. 5 eine erste Ausführungsform und

Fig. 6 eine zweite Ausführungsform eines Empfängers gemäß der Erfindung.

Fig. 1 zeigt ein Gerät G, welches eine Vielzahl von Geräteeinsätzen GE enthält. Das Gerät G kann Bestandteil eines Fernsprechvermittlungssystems oder eines Fernsprechübertragungssystems sein. Für die Überprüfung auf Unterbrechung des Übertragungsweges innerhalb des Geräts G ist eine Prüfeinrichtung PE vorgesehen, welche eine Koppeleinrichtung K, eine Steuereinrichtung ST, einen Sender S und einen Empfänger E enthält. In den Geräteeinsätzen GE sind jeweils an den Ein- bzw. Ausgängen Schalteinrichtungen SCH angeordnet, mittels welchen eine Umschaltung auf die Prüfeinrichtung PE zur Einspeisung von Prüfsignalen P erfolgen kann. Die Steuereinrichtung ST öffnet und schließt die Schalter SCH und schaltet den Übertragungsweg für die Prüfsignale P innerhalb der Koppeleinrichtung K durch. In Fig. 1 ist die Ansteuerung der Schalter SCH zur Durchführung der Umschaltung strichliniert dargestellt.

In den Geräteeinsätzen GE sind Schaltungsteile angeordnet um die erforderlichen Funktionen innerhalb der Vermittlungsstelle oder der Übertragungseinrichtung durchführen zu können. Bei Anwendung des Geräts G in einer Vermittlungseinrichtung, werden mit Klemmen KL des Geräts G Fernmeldeleitungen verbunden, über welche beispielsweise Sprachsignale übertragen werden. Im Gerät G erfolgt die Durchschaltung von Zubringerleitungen auf entsprechende Abnehmerleitungen der Fernmeldeleitung. Am Ort der Leitungsschnittstelle zur Fernmeldeleitung sind im ersten und letzten Geräteeinsatz GE Übertrager angeordnet.

Die Unterbrechung des Übertragungsweges innerhalb des Geräts G kann dadurch erkannt werden, daß das gesendete Prüfsignal P nicht im Empfänger E empfangen wird. Durch Unterteilung des Übertragungswegs in einzelne Leitungsabschnitte ist der Ort der Leitungsunterbrechung eindeutig bestimmbar. Neben dem hohen Schaltungsaufwand für die Schalteinrichtung SCH und für deren Ansteuerung liegt ein weiterer Nachteil darin, daß während der Durchführung der Prüfung, auf dem Übertragungsweg innerhalb des Geräts G keine Nutzsignale (z. B. Sprachsignale) übertragen werden können.

Dem empfindungsgemäßen Prüfverfahren liegt die Erkenntnis zugrunde, daß die Wahrscheinlichkeit einer Unterbrechung der Übertragerwicklung auf der Seite zur Fernmeldeleitung hin gering ist.

Durch die Übertrager, welche am Anfang und Ende des Übertragungswegs innerhalb des Geräts G angeordnet sind, werden die Anforderungen bezüglich Symmetrie und Überspannungsschutz erfüllt. Da eine Unterbrechung der Übertragerwicklung eine geringe Wahrscheinlichkeit besitzt, ist die Einspeisung des Prüfsignals P und dessen Auskopplung besonders einfach durchzuführen.

Zudem kann als Prüfsignal P ein Impuls oder ein Puls verwendet werden, welche während des Prüfvorgangs als kurzzeitige « Störung » bzw. als kurzzeitiges « Geräusch » auf der Fernmeldeleitung auftreten. Eine Abtrennung der Fernmeldeleitung während des Prüfvorgangs ist nicht erforderlich. Die Steuereinrichtung ST im Gerät G ist programmgesteuert, wodurch in vorteilhafter Weise bereits in der Steuereinrichtung ST erzeugte Signale, vorzugsweise Impulse bzw. Pulse, zur Erzeugung des Prüfsignals P mitverwendet werden können.

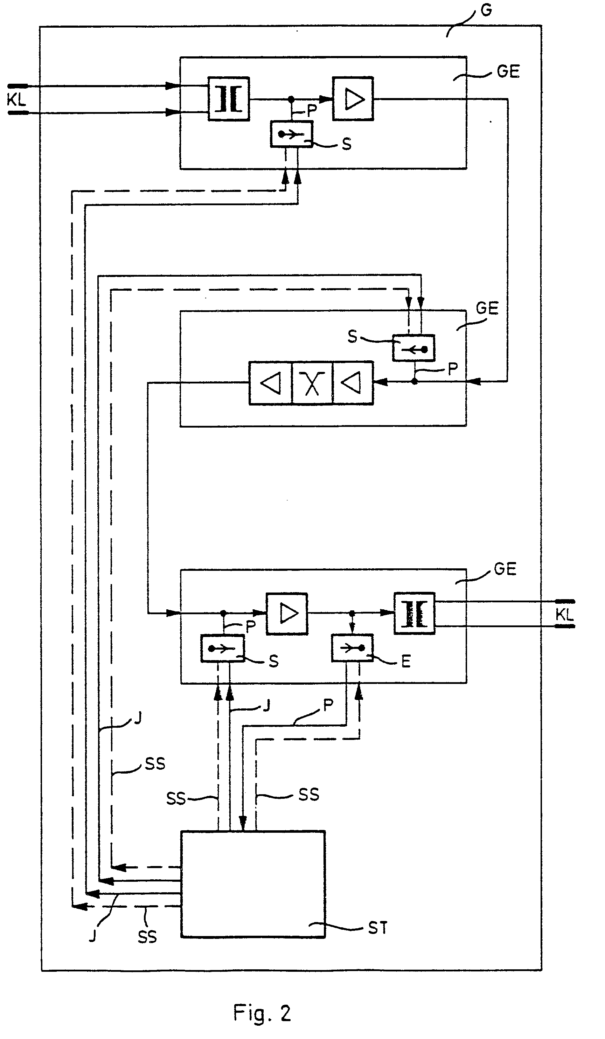

Für die in Fig. 2 dargestellte erste Ausführungsform der Prüfeinrichtung gemäß der Erfindung wird am Eingang eines jeden Geräteeinsatzes GE ein Sender S angeordnet (am Anfang des Übertragungswegs nach dem Übertrager). Die Steuereinrichtung ST steuert in einem Prüfzyklus nacheinander die Sender S an. Der Prüfzyklus kann beispielsweise mit einer Impulsübertragung über den gesamten Übertragungsweg des Geräts G beginnen. Am Ende des Übertragungswegs ist in einem Geräteeinsatz GE ein Empfänger E angeordnet, welcher von der Steuereinrichtung ST angesteuert wird. Die Ansteuerung der Empfänger E bzw. des Senders S erfolgt mittels Steuersignale SS der Steuereinrichtung ST. Zur Prüfsignalerzeugung im Sender S können ein Steuersignal SS und ein (damit im Sender S verknüpft) Impuls J, welche an Ausgängen der Steuereinrichtung ST erscheinen, mitverwendet werden.

Wird im Empfänger E das gesendete Prüfsignal P empfangen, so wird der Prüfzyklus abgebrochen. Wird das Prüfsignal P im Empfänger E nicht empfangen, so wird von der Steuereinrichtung ST nun nicht mehr der Sender S im ersten Geräteeinsatz GE, sondern der Sender S des im Übertragungsweg nachfolgenden Geräteeinsatzes GE angesteuert. Die Verkürzung des Übertragungswegs wird solange fortgesetzt bis das gesendete Prüfsignal P im Empfänger E empfangen wird. Der Geräteeinsatz GE (bzw. der Leitungsabschnitt des Übertragungswegs) vor dem letzten Prüfschritt wird als defekt gekennzeichnet.

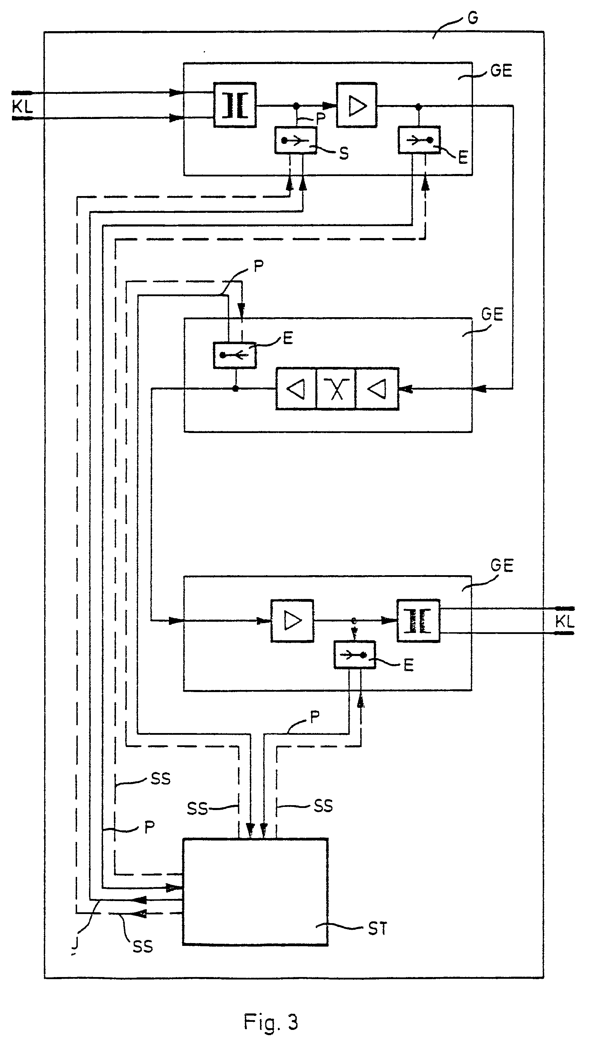

Fig. 3 zeigt für die zweite Ausführungsform der Prüfeinrichtung die Anordnung eines Senders S am Anfang des Übertragungswegs innerhalb des Geräts G und jeweils eines Empfängers E am Ausgang jedes Geräteeinsatzes GE. Der Prüfzyklus läuft in gleicher Weise ab wie anhand der Prüfeinrichtung gemäß Fig. 2 beschrieben wurde. In der Regel ist der Aufwand für den Empfänger E größer als der Aufwand für den Sender S.

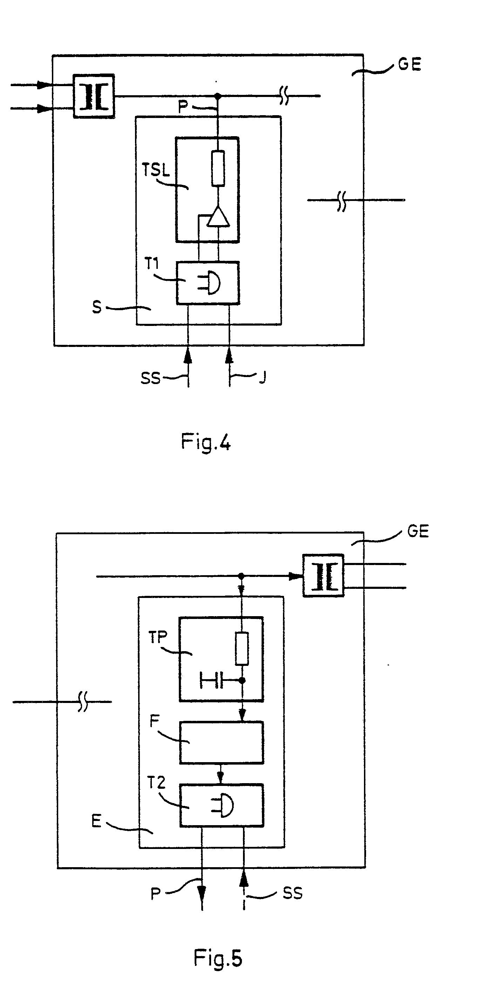

In Fig. 4 ist eine Ausführungsform für einen Sender S dargestellt. Der Sender S enthält eine erste Torschaltung T1, welcher ein von der Steuereinrichtung ST abgegebenes Steuersignal SS und ein Impuls J zugeführt werden. Die Torschaltung T1 verknüpft das Steuersignal SS mit dem Impuls J und führt das Ausgangssignal einer Tristate-Logik TSL zu. Am Ausgang der Tristate-Logik TSL steht das Prüfsignal P zur Verfügung.

Der Aufwand zur Erzeugung des Prüfsignals P im Sender S erfordert lediglich preisgünstig erhältliche Logikbausteine.

Der erzeugte Prüfimpuls P ist gekennzeichnet durch die Impulshöhe (Amplitude) und durch die Impulsdauer. Ist der Übertragungsweg innerhalb des Geräts G gleichspannungsgekoppelt, d. h. nur am Ausgang und Eingang (Klemmen K) zur Leitung mit Übertragern abgeschlossen, so kann die Impulshöhe so gewählt werden, daß die Tristate-Logik TSL einen Gleichspannungspegel am Kupferwiderstand des Ausgangsübertragers erzeugt. Die Impulsdauer des Prüfimpuls P kann beliebig gewählt werden und damit auch die Abfragezeitpunkte der Empfänger E.

Für die zentrale Steuereinrichtung ST sind keine besonderen Zeitbedingungen zu erfüllen. Durch die Vormagnetisierung der Ausgangsübertrager werden Störungen, welche über die Fernmeldeleitung während des Prüfzyklus eingekoppelt werden, zusätzlich gedämpft.

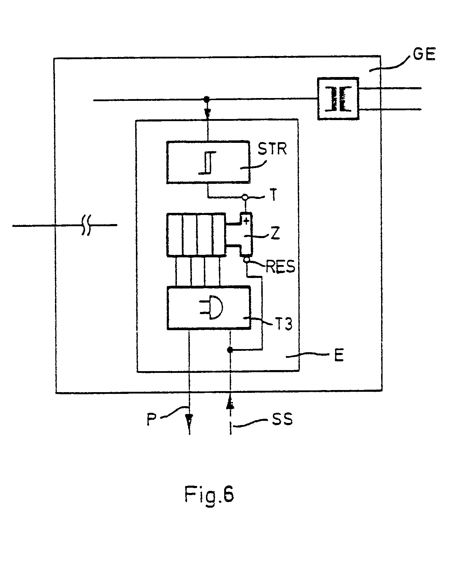

Fig. 5 zeigt einen im Empfänger E angeordneten Fensterkomparator F dessen Ausgangssignal durch die Steuereinrichtung ST zu bestimmten Zeitpunkten abgefragt wird.

Der Fensterkomparator F ist eine Schaltungsanordnung, welche überprüft ob z. B. der Pegel des zugeführten Signals innerhalb zweier vorgebbarer Referenzwerte (d. h. innerhalb des Fensters) liegt oder nicht. Je nachdem wird das Ausgangssignal den einen oder den anderen logischen Wert annehmen.

Der Empfänger E enthält einen Tiefpaß TP, dem das Prüfsignal P des Senders S zugeführt wird. Der Fensterkomparator F ist einerseits mit dem Tiefpaß TP andererseits mit einer zweiten Torschaltung T2 verbunden. Die Torschaltung T2 im Empfänger E wird mittels eines Steuersignals SS der Steuereinrichtung ST so angesteuert, daß die Zeitbedingungen für die Abfrage erfüllt sind. Am Ausgang der zweiten Torschaltung T2 tritt im Falle keiner Unterbrechung des Übertragungsweges das abgefragte Prüfsignal P auf.

Da der Übertragungsweg zu der Fernmeldeleitung und innerhalb des Geräts G nicht unterbrochen wird, können Störungen eingekoppelt werden, so daß neben einer Mehrfachabfrage des Empfängers E das Prüfsignal P, d. h. Impulsdauer und Impulshöhe, sowie Fensterbreite und Abfragezeitpunkte geeignet festzulegen sind.

Ist der Übertragungsweg innerhalb des Geräts G nicht gleichspannungsgekoppelt, so darf die Impulsdauer des Prüfsignals P die untere Grenzfrequenz des Übertragungswegs nicht überschreiten. Als Prüfsignal kann ein Puls gewählt werden, dessen Frequenz im Übertragungsband des Übertragungswegs liegt. Die Zeitbedingungen, welche die Impulsdauer und die Abfragezeitpunkte des Empfängers E bestimmen, ergeben sich durch die untere Grenzfrequenz des Übertragungswegs. Liegt die weitere Grenzfrequenz beispielsweise bei einigen 10 Hz so sind die daraus sich ergebenden Zeitbedingungen für die Steuereinrichtung ST erfüllbar.

Da die Durchführung der Prüfung für die Steuereinrichtung ST eine zusätzliche Aufgabe darstellt, sind die zeitlichen Bedingungen bei einer unteren Grenzfrequenz größer einigen 100 Hz nicht immer erfüllbar.

Fig. 6 zeigt eine weitere Ausführungsform für einen Empfänger E. Der Empfänger E enthält einen Schmitt-Trigger STR, welchen auf der Seite zum Sender S hin das Prüfsignal P, vorzugsweise ein Puls, zugeführt wird. Das binäre Ausgangssignal des Schmitt-Triggers STR nimmt beispielsweise den logischen Wert 1 an, wenn das Eingangssignal (Prüfsignal P) einen bestimmten Schwellwert (Spannung U1) überschreitet. Das Ausgangssignal behält den logischen Wert 1 so lange bei, bis das Prüfsignal P einen zweiten Schwellwert (Spannung U2) unterschreitet.

Vom Empfänger E werden die Impulsflanken des Prüfsignals P mittels Schmitt-Trigger STR und einem im Empfänger E angeordneten Zähler Z ausgewertet.

Das Ausgangssignal des Schmitt-Triggers STR wird dem Zählereingang (mit + im Steuerblock des Zählers Z bezeichnet) des Zählers Z zugeführt. Die Ausgänge des Zählers Z sind mit einer dritten Torschaltung T3 verbunden. Der Torschaltung T3 bzw. einem Rücksetzeingang RES des Zählers Z wird das Steuersignal SS der Steuereinrichtung ST zugeführt. Der Zähler Z wird zurückgesetzt, wenn das Steuersignal SS den logischen Wert « O » annimmt. Aus dem Zählerstand des Zählers Z kann auf das Vorhandensein des Prüfsignals P geschlossen werden.

Diese Ausführungsform weist den Vorteil auf, daß die Zeitbedingungen für die Steuereinrichtung ST einfach zu erfüllen sind und daß das Übertragungsverhalten des Übertragungswegs die Auswertung kaum beeinfußt.

Vergleicht man den Schaltungsaufwand von Empfänger E mit dem für den Sender S so ist für den Sender S der Schaltungsaufwand geringer. Der gesamte Schaltungsaufwand für die erfindungsgemäße Prüfeinrichtung ist unabhängig davon im Vergleich zu einer Prüfeinrichtung mit einer Vielzahl von Schalteinrichtungen in den Geräteeinsätzen geringer.

**Patentansprüche**

1. Verfahren zum Prüfen auf Unterbrechung des Übertragungswegs innerhalb eines Geräts (G) mit in Serie geschalteter Geräteeinsätze (GE) mittels einer Prüfeinrichtung, welche mindestens einen Sender (S), mindestens einen Empfänger (E) und eine Steuereinrichtung (ST) enthält, dadurch gekennzeichnet, daß die Steuereinrichtung (ST), zur Prüfung auf Unterbrechung des gesamten oder von Teilen des Übertragungswegs, in einem ersten Prüfschritt eines Prüfzyklus den am Anfang des Übertragungswegs liegenden und im Geräteeinsatz (GE) angeordneten Sender (S) ansteuert und prüft, ob das von diesem gesendete Prüfsignal (P) von einem an Ende des Übertragungswegs in einem Geräteeinsatz (GE) angeordneten und von der Steuereinrichtung (ST) ansteuerbaren Empfänger (E) empfangen wird oder nicht, daß bei festgestellter Unterbrechung die Steuereinrichtung (ST) die im Übertragungsweg nachfolgenden und in jedem Geräteeinsatz (GE) angeordneten Sender (S) ansteuert und prüft, ob die jeweils gesendeten Prüfsignale (P) vom Empfänger (E) empfangen werden oder nicht und daß die Steuereinrichtung (ST) den Prüfzyklus abbricht, wenn ein gesendetes Prüfsignal (P) im Empfänger (E) empfangen wird.

2. Verfahren zum Prüfen auf Unterbrechung des Übertragungswegs innerhalb eines Geräts (G) mit in Serie geschalteter Geräteeinsätze (GE) mittels einer Prüfeinrichtung, welche mindestens einen Sender (S), mindestens einen Empfänger (E) und eine Steuereinrichtung (ST) enthält, dadurch gekennzeichnet, daß die Steuereinrichtung (ST), zur Prüfung auf Unterbrechung des gesamten oder von Teilen des Übertragungswegs, in einem ersten Prüfschritt den am Anfang des Übertragungswegs in einem Geräteeinsatz (GE) angeordneten Sender (S) ansteuert und prüft, ob der im Übertragungsweg nachfolgende und in einem Geräteeinsatz (GE) angeordnete Empfänger (E) das von dem Sender (S) gesendete Prüfsignal (P) empfängt oder nicht, daß bei festgestellter Unterbrechung die Steuereinrichtung (ST) die im Übertragungsweg nachfolgenden und in jedem Geräteeinsatz (GE) angeordneten Empfänger (E) ansteuert und prüft, ob das vom Sender (S) gesendete Prüfsignal (P) empfangen wird oder nicht und daß die Steuereinrichtung (ST) den Prüfzyklus abbricht, wenn einer der Empfänger (E) das Prüfsignal (P) empfängt.

3. Verfahren nach Anspruch 1 und 2, dadurch gekennzeichnet, daß als Prüfsignal (P) ein Impuls oder ein Puls verwendet werden, wozu Signale (SS, J) der Steuereinrichtung (ST) verknüpft werden und daß das Prüfsignal (P) über den Übertragungsweg während der Übertragungspause von Nutzsignalen oder zusammen mit diesen übertragen wird.

4. Prüfeinrichtung zur Durchführung des Verfahrens nach Anspruch 1 oder 2, welche eine Steuereinrichtung (ST) und mindestens einen Sender (S) oder mindestens einen Empfänger (E) aufweist, dadurch gekennzeichnet, daß der Sender (S) eine Torschaltung (T1) und eine mit deren Ausgang verbundene Tristate-Logik (TSL) mit Widerstandsnetzwerk enthält, daß zur Erzeugung des Prüfsignals (P) den Eingängen der Torschaltung (T1) ein von der Steuerschaltung (ST) erzeugter Impuls (J) und ein impuls- oder pulsförmiges Steuersignal (SS) zugeführt werden und daß Ausgang der Tristate-Logik (TSL) das Prüfsignal (P) auftritt.

5. Prüfeinrichtung nach Anspruch 4, dadurch gekennzeichnet, daß einem am Eingang des Empfängers (E) angeordneten Tiefpaß (TP), dessen Ausgang mit einem Fensterkomparator (F) verbunden ist, das Prüfsignal (P) zugeführt wird, daß der Ausgang des Fensterkomparators (F) mit einem Eingang einer Torschaltung (T2) verbunden ist und daß einem weiteren Eingang der Torschaltung (T2) ein in der Steuerschaltung (ST) erzeugtes impuls- oder pulsförmiges Steuersignal (SS) zugeführt wird.

6. Prüfeinrichtung nach Anspruch 4, dadurch gekennzeichnet, daß einem am Eingang des Empfängers (E) angeordneten Schmitt-Trigger (TSL), dessen Ausgang mit dem Takteingang (T) eines Zählers (Z) verbunden ist, das Prüfsignal (P) zugeführt wird, daß das Zählergebnis und ein in der Steuereinrichtung (ST) erzeugtes impuls- oder pulsförmiges Steuersignal (SS) einer Torschaltung (T3) zugeführt werden und daß die Torschaltung (T3) mit dem Rücksetzeingang (RES) des Zählers (Z) verbunden ist.

## Claims

1. A method of testing for interruptions the transmission path within a device (G) having series-connected modules (GE) by means of a test arrangement, comprising at least one receiver (E) and one control device (ST), characterized in that the control device (ST) for testing for interruptions the complete or portions of the complete transmission path, in a first step of a test cycle drives the transmitter (S) located at the beginning of the transmission path and arranged in the module (GE), and tests whether the transmitted test signal (P) is received or not received by a controllable receiver (E) arranged at the end of the transmission path in a module (GE), in that in case in case an interruption is found the control device (ST) drives the transmitter (S) subsequent in the transmission path and arranged in each module (GE), and tests whether the transmitted test signals are received or not received by receiver (E), and in that the control device (ST) breaks off the test cycle when a transmitted test signal (P) is received in the receiver (E).

2. A method of testing for interruptions the transmission path within a device (G) having series-connected modules (GE) using a test arrangement, comprising at least one transmitter (S), at least one receiver (E) and one control device (ST), characterized in that the control device (ST) for testing the complete or portions of the complete transmission path for interruptions, in a first step of the test cycle controls the transmitter (S) arranged at the beginning of the transmission path in a module (GE), and tests whether the receiver (E) subsequent in the transmission path and arranged in a module (GE) receives or not receives the test signal (P) transmitted by the transmitter (S), in that in case of an interruption found, the control device (ST) drives the subsequent receiver in the transmission path and arranged in each module (GE) and tests whether the test signal (P) transmitted by the transmitter (S) is received or not received and in that the control device (ST) breaks off the test cycle when one of the receivers (E) receives the test signal (P).

3. A method as claimed in Claims 1 and 2, characterized in that as a test signal (P) a pulse or a pulse train is used, for which purpose signals (SS, J) of the control device (ST) are combined and in that the test signal (P) is transmited via the transmission path together with useful signals or during the transmission interval of useful signals.

4. A test arrangement for implementing the method as claimed in Claim 1 or 2, comprising a control device (ST) and at least one transmitter (S) or at least one receiver (E), characterized in that the transmitter (S) comprises a gate circuit (T1) and a tristate logic (TSL) with resistance network connected to its output, in that for producing the test signal (P) a pulse (J) produced by the control circuit (ST) and a pulse-shaped control signal (SS) are applied to the inputs of the gate circuit (T1) and in that the test signal (P) appears at the output of the tristate logic (TSL).

5. A test arrangement as claimed in Claim 4, characterized in that the test signal (P) is applied to a low-pass filter (TP) which is arranged at the input of the receiver (E) and whose output is connected to a window-comparator (F), in that the output of the window-comparator (F) is connected to the input of a gate circuit (T2) and in that a pulse-shaped control signal (SS) produced in the control circuit (ST) is applied to a further input of the gate circuit (T2).

6. A test arrangement as claimed in Claim 4, characterized in that the test signal (P) is applied to a Schmitt trigger (STR) which is provided at the input of the receiver (E) and whose output is connected to the clock input (T) of a counter (Z), in that the counter reading and a pulse-shaped control signal (SS) produced in the control device (ST) are applied to a gate circuit (T3) and in that the gate circuit (T3) is connected to the reset input (RES) of the counter (Z).

**Revendications**

1. Procédé pour tester, en vue de déceler les interruptions, la voie de transmission dans un appareil (G) comprenant des dispositifs insérés (GE) connectés en série, au moyen d'un dispositif d'essai, qui comprend au moins un émetteur (S), au moins un récepteur (E) et un dispositif de commande (ST), caractérisé en ce que, pour tester l'ensemble de la voie de transmission ou des parties de celle-ci en vue de déceler des interruptions, au cours d'un premier pas d'un cycle d'essai, le dispositif de commande (ST) active l'émetteur (S) se trouvant au début de la voie de transmission, dans le dispositif inséré (GE), et vérifie si le signal d'essai (P) qu'il émet est ou non reçu par le récepteur (E) se trouvant à la fin de la voie de transmission, dans un dispositif inséré (GE), et pouvant être activé par le dispositif de commande (ST), en cas de détection d'une interruption, le dispositif de commande (ST) active l'émetteur (S) qui est monté dans chaque dispositif inséré (GE) et qui suit dans la voie de transmission et vérifie si le signal d'essai (P) respectif émis est ou non reçu par le récepteur (E), et le dispositif de commande (ST) arrête le cycle d'essai lorsqu'un signal d'essai émis (P) est reçu dans le récepteur (E).

2. Procédé pour tester, en vue de déceler les interruptions, la voie de transmission dans un appareil (G) comprenant des dispositifs insérés (GE) connectés en série, au moyen d'un dispositif d'essai, qui comprend au moins un émetteur (S), au moins un récepteur (E) et un dispositif de commande (ST), caractérisé en ce que, pour tester l'ensemble de la voie de transmission ou des parties de celle-ci en vue de déceler des interruptions, au cours d'un premier pas d'un cycle d'essai, le dispositif de commande (ST) active l'émetteur (S) se trouvant au début de la voie de transmission, dans un dispositif inséré (GE), et vérifie si le récepteur (E) suivant, dans la voie de transmission, et monté dans un dispositif inséré (GE) reçoit ou non le signal d'essai (P) émis par l'émetteur (S), en cas de détection d'une interruption, le dispositif de commande (ST) active le récepteur (E) qui est monté dans chaque dispositif inséré (GE) et qui suit dans la voie de transmission et vérifie si le signal d'essai (P) émis par l'émetteur (S) est ou non reçu, et le dispositif de commande (ST) arrête le cycle d'essai lorsqu'un des récepteurs (E) reçoit le signal d'essai (P).

3. Procédé suivant les revendications 1 et 2, caractérisé en ce qu'à titre de signal d'essai (P), on utilise une impulsion ou un train d'impulsions avec lesquelles sont combinés des signaux (SS, J) du dispositif de commande (ST) et le signal d'essai (P) est transmis sur la voie de transmission pendant les pauses de la transmission de signaux utiles ou en même temps que ceux-ci.

4. Dispositif d'essai pour l'exécution du procédé suivant la revendication 1 ou 2, qui comprend un dispositif de commande (ST) et au moins un émetteur (S) ou au moins un récepteur (E), caractérisé en ce que l'émetteur (S) comprend un circuit-porte (T1) et, connecté à sa sortie, un circuit logique à trois états (TSL) comprenant un réseau de résistances, que pour la production du signal d'essai (P), une impulsion (J) produite par le circuit de commande (ST) et un signal de commande (SS) ayant la forme d'une impulsion ou d'un train d'impulsions sont amenés aux entrées du circuit-porte (T1) et que le signal d'essai (P) se présente à la sortie du circuit logique à trois états (TSL).

5. Dispositif d'essai suivant la revendication 4, caractérisé en ce que le signal d'essai (P) est amené à un filtre passe-bas (TP) prévu à l'entrée du récepteur (E), dont la sortie est connectée à un comparateur à fenêtre (F), la sortie du comparateur à fenêtre (F) est connectée à une entrée d'un circuit-porte (T2) et une autre entrée du circuit-porte (T2) reçoit un signal de commande (SS) ayant la forme d'une impulsion ou d'un train d'impulsions qui est produit dans le circuit de commande (ST).

6. Dispositif d'essai suivant la revendication 4, caractérisé en ce que le signal d'essai (P) est amené à une bascule de Schmitt (TSL) prévue à l'entrée du récepteur (E) dont la sortie est connectée à l'entrée d'horloge (T) d'un compteur (Z), le compte du compteur et un signal de commande (SS) ayant la forme d'une impulsion ou d'un train d'impulsions qui est produit dans le dispositif de commande (ST) sont amenés à un circuit-porte (T3) et que le circuit-porte (T3) est connecté à l'entrée de repositionnement (RES) du compteur (Z).

0 145 048

Fig. 1

1

Fig. 2

Fig. 3

Fig.4

Fig.5

Fig.6